# EUROPEAN PATENT APPLICATION

(11) **EP 2 796 774 A1**
(43) Date of publication of application: **29.10.2014**
(21) Application number: 14165584.5
(22) Date of filing: 23.04.2014
(51) Int. Cl.: F21S 9/03, F21V 21/10, H01L 31/042, E04H 12/18

(54) **Mast equipped with photovoltaic cells**

(30) Priority: 23.04.2013 NL 2010695
(71) Applicant: Flexsol Solutions B.V., 2629 HG Delft (NL)
(72) Inventor: van den Berg, Lennert Frans, 2629 HG Delft (NL); van Boxtel, Sebastiaan Johannes Matheus, 5491 CJ Sint-Oedenrode (NL)
(74) Representative: Cramwinckel, Michiel

(57) **Abstract**

The present invention relates to a mast that is equipped with photovoltaic cells (PV cells), comprising a substantially vertically extending lower section, as well as an upper section that is equipped with PV cells and is placed on top of the lower section and is connected with the latter, whereby the lower section comprises an outer profile with an external surface, whereby the upper section comprises an inner profile, in which the inner profile extends over part of the lower section in the outer profile, in which both profiles are provided with common contact surfaces in the common part of the lower section, whereby a first number of contact surfaces extends with a tangential component, and a second number of contact surfaces extends with a radial component.

This way, the mast can be constructed by merely assembling loose and individual parts and components, without the use of welding or other cumbersome procedures.

## Description

The present invention relates to a mast, more particularly to a mast that is equipped with photovoltaic cells (PV cells), such as a street lamp, comprising a substantially vertically extending lower section, as well as an upper section that is equipped with PV cells and is placed on top of the lower section and connected with the latter.

The recent increase in efficiency of PV cells has made it possible to develop masts equipped with PV cells, such as street lamps, in which use is made of energy directly generated by sun light. An example of such a street lamp is described in GB2464288. This document describes a street lamp having units of flat PV cells. The upper section of the mast comprises of an elongated central cylindrical tube as a central passageway. This upper end of the mast is connected to a lower end of the mast via a locating pin in the lower end part of the mast which has a sliding fit with the lower end of the central passageway of the upper part of the mast.

JP2004207109 describes a mast comprising a hollow profile being provided with vertical channels on its outer surface. Flat or slightly curved solar panels are attached to the mast by means of screws.

As it is expected that increasing use will be made of these masts and lamp posts, the goal of the present invention is to provide such a mast and lamp post that can be assembled in a simple manner.

This is achieved by the following mast. Mast equipped with PV cells, comprising:
a substantially vertically extending lower section; and
an upper section, equipped with PV cells and as a continuation placed on top of the lower section and connected to the latter;
characterized by the fact that
the lower section comprises an outer profile with an external surface;
the upper section comprises an inner profile;
the inner profile extends over part of the lower section in the outer profile;
both profiles comprise common contact surfaces in the common part of the lower section;
a first number of contact surfaces extends with a tangential component;
a second number of contact surfaces extends with a radial component.

This goal is realized by means of a mast as described above. By applying common contact surfaces having the tangential component and the radial component allows one to assemble the masts without the need to weld or make use of other cumbersome processes. In contrast it is possible to simply assemble the individual parts or components. This not only leads to an immediate cost saving but also offers the possibility of shipping the parts to the installation site and assembling the mast on site. The profiles may also be produced locally, for example by means of an extrusion process.

Furthermore, it can be mentioned that the expression "cylindrical" will be used in the context of the present invention as a description of the characteristics of a three-dimensional body that comprises surfaces determined by mutually parallel generating lines, such as for example a tubular body. This implies that not only circular cylindrical forms, such as tubular forms, can be taken into account, but also includes elongated bodies having a cross-section having an oval, triangular, square forms or polygonal forms of which the section is not necessarily regular. Preferably the expression cylindrical is used to describe a tubular body as illustrated in the Figures.

According to a first embodiment of the invention the cross section of each of the profiles is symmetrical to a first axis of symmetry, and the first axes of symmetry of the two profiles coincide in the common part of the lower section. The fact that each of the profiles is symmetrical not only facilitates the design but also makes use of the fact that most lamp posts have a circular cross section or a cross section in the form of a polygon with numerous sides. Another advantage of the symmetry can be found in the fact that the radially or tangentially extending surfaces are provided in opposing directions, in such a way that a rotation or a translation in both directions perpendicular to the axial direction can be countered and avoided.

Moreover, it is advantageous for the outer profile to comprise a circumferentially extending outer wall that forms a continuation of the external surface. The outer profile further comprises at least one pair of a channel-enclosing channel walls that extend from the outer wall and are symmetrical to the first axis of symmetry. The side of the channel-enclosing channel walls facing away from the channel suitably extends with a component that is parallel to the first axis of symmetry. This measure substantially provides a channel for the passage of conduits or for the passage of convection air, but the channel walls also form substantially radially extending surfaces that, in combination with the surfaces in question of the inner profile, prohibit a possible rotation between the inner profile and the outer profile. The closed outer wall provides on its inside a surface that extends with a tangential component, whereby this surface, in conjunction with the surface of the inner profile, prohibits a mutual translation of the profiles perpendicular to the axial direction. It is also possible to provide a strip-like body in the channel, for example a strip bearing electronics. This strip can be secured in place in the channel by means of bolts or clamps.

Below the part in which both profiles are common, the outer profile is adapted to house parts and components such as battery housings or electronic components. In order to determine the location of these housings, it is advantageous for the outer profile to comprise at least one pair of abutments that form a continuation of the outer wall and that are symmetrical to the first axis of symmetry. These abutments comprise tangential planes that extend substantially parallel to the first axis of symmetry, whereby the tangential planes extend from the projection perpendicular to the axis of symmetry of the end of the channel walls on the tangential planes with a directional component towards the centre of the outer profile. The abutments serve as abutments for a housing provided in the outer profile, whereby this housing comprises for example a rectangular cross section in a first direction, whereas the ends of the channel walls serve as abutments in the second direction that is perpendicular to the first direction. The ends of the channel walls can converge with the aim of increasing the abutment surface. The same embodiment also at least comprises a first housing, in the outer profile and under the common part of the lower section, a housing that along its sides is enclosed by the ends of the channel walls and by the tangential planes of the abutments. It should be clear that in certain circumstances, for example in exceptionally high lamp posts, the inner profile can extend over the full length of the outer profile. In the corresponding case there is no space left for the housings, but the profile does however permit the presence of the inner profile.

According to a further embodiment, the abutments comprise a through bore extending in the axial direction. This bore may be used for the connection of structures that extend above and under the outer profile. The bore may be provided with a tap to allow connection by means of screws that extend axially through the outer wall, for example bushings connected with a foot plate in which the mast is placed, or fittings or brackets or jibs that can be mounted onto the mast. This way, the screw connection will be somewhat more rigid and firm. Furthermore, the end face of the abutments will be useful for preventing a mutual translation of the profiles.

A further preferred embodiment provides the outer profile to comprise a number of substantially trapezoidal ridges that extend from the outer wall in the direction of the inner space of the profile, whereby a number of these ridges comprise a through bore in the axial direction. The purpose of these ridges is to form a firm basis for radial screws that can be used to mount additional components onto the outer wall of the outer profile, whereas the possibly but not necessarily present bores serve to fasten structures by means of axial screws, structures that extend above and below the outer profile. The choice for the trapezoidal ridges is dictated here by the necessity for sufficient firmness and stability; it will be obvious, however, that also other shapes can be selected, such as spherical shapes or shapes that are thicker in the vicinity of the bore. It is essential that the stability of the arrangement is maintained, even upon mounting a screw or bolt that extends in a substantially radial direction.

Preferably the cross section of each of the profiles is symmetrical to a second axis of symmetry that is perpendicular to the first axis of symmetry, and also preferably the second axes of symmetry of the two profiles coincide in the common part of the lower section. Accordingly, an even larger degree of symmetry can be obtained, along with the accompanying advantages.

It is advantageous for the inner profile to comprise a substantially rounded outer wall in which at least two slots are provided, and for each of these slots to fit around a pair of channel walls of the outer profile. The rounded outer wall serves as a contact surface for the tangential planes of the outer profile, in order to prevent a mutual translational movement of the profiles, whereas the radial planes of the slots serve as contact surfaces for the radial planes of the outer profile, in order to prevent a mutual rotational movement of the profiles.

Yet another embodiment provides the inner profile to comprise a central channel enclosed by a central channel wall, and also that this central channel is connected with the outer wall through substantially radially extending wall parts. The central bore serves for the passage of cables or convection air, whereas the channel walls as well as the substantially radially extending wall parts serve to create extra firmness and stability.

To increase the strength of the construction in the area of the common part of both profiles, it is preferred for the radially extending wall parts of the inner profile to be connected at their outer periphery to the parts of the outer wall that are situated outside the slots. It indeed is in this way that a direct transfer of the forces between the wall parts that are in contact with the outer profile and the channel wall will be realized.

The inner profile preferably comprises ridges that form a continuation of the inner side of the outer wall and in which bores are provided. The purpose of these bores is to fix above and below the inner profile extending structures by means of axial screws.

To increase the strength of the inner profile, preferably at least part of the number of ridges forms a continuation of the radial wall parts.

At least one of the profiles preferably comprises an extruded aluminium profile. Aluminium is a relatively cheap and durable material that is easily shaped by means of extrusion. It goes without saying that it is even more preferable when both profiles are made of extruded aluminium. In the latter case contact potentials can be avoided that would otherwise possibly give rise to corrosion. The use of extrusion methods automatically implies a cylindrical form. The word "cylindrical" means that the walls are parallel to an axis. The word "cylindrical" is often used in the context of a straight circular cylinder, which is not the case here. On the other hand it is not strictly necessary to make use of aluminium; nowadays it is also possible to extrude other materials such as fibre-reinforced synthetic materials or to shape them by means of methods similar to extrusion.

In order to make use of the interior space of the outer profile below the inner profile, it is to be preferred that a first housing is provided in the outer profile, below the common part of the lower section and in the outer profile, a housing which along its sides is enclosed by the ends of the channel walls and by the tangential planes of the abutments. This first housing can comprise an electronics unit, but it is also possible for a battery to be inserted into the housing.

According to yet another embodiment the outer profile comprises an opening that can be closed off by means of a hatch. These measures make it possible to insert the first housing through this opening and to remove it. Furthermore it is advantageous when the top or bottom side of the housing can be reached in order to be able to attach plugs to and remove them from sockets on the top and bottom sides. When the electronics unit is present in the first housing, it may be connected by means of cables from the top side with the PV units, as well as with a light source that has been inserted into the fitting, as well as with the batteries and possibly with a network connection by means of cables.

Preferably the outer profile comprises at least one second housing above or below the first housing, whereby the second housing can comprise a rechargeable battery. The second housings can thus be inserted through the opening into the interior space of the outer profile, and the batteries inside the outer profile can be moved up or down. Thus it is possible to insert more housings into the profile. The first and second housings can be identical. Next to a battery also other elements such as for example a water pump or air compressor may be present in said space. Such elements may be used for providing water and/or air to clean the exterior surfaces of the PV cell.

The PV cells may be provided on a surface which coincides with the design of the mast itself. For example a tubular mast provided with tubular PV cell comprising elements. The PV cells may alternatively be provided as panels with flat PV cells, wherein the panels are fixed to the upper section of the mast. The flat panels may also run along the mast as one or more elongated strips. The PV cells can also be applied in conical units shaped in the form of part of a cone, units that preferably have the top angle pointed upwardly.

Preferably the upper section of the mast comprises an inner profile that is adjusted to extend through PV cells that have been organized on a structure with a cylindrical surface. The PV cells are thus preferably part of a carrier with the shape of a cylindrical surface, the internal dimensions of which correspond to the exterior dimensions of the inner profile. Each of these carriers with the shape of a cylindrical surface may comprise a connection box that protrudes from the inner wall of the carrier into the interior thereof, as well as a connection box of which the horizontal dimensions substantially correspond to the dimensions of the slots in the inner profile. An advantageous configuration is thus obtained, as the PV cells are arranged symmetrically in a circle around the mast and their rotational movement is blocked by means of the respective connection box. Carriers placed one above the other can be installed, rotated over 90°, in such a way that every connection box has its own channel. If the inner profile comprises other numbers of slots it goes without saying that other numbers of carriers can be installed with the enclosed angles being equal to 360° divided by the number of slots. The above also mentions a cylinder in the sense of a body of which the generating lines of the external surface are mutually parallel.

According to an alternative embodiment the PV cells are mounted into at least one pair of half cylindrical carriers, the inner dimensions of which fit around the outer dimensions of the inner profile, and each of the half cylindrical carriers comprises a connection box that protrudes from the interior wall of the carrier towards the interior thereof, whereby the horizontal dimensions of the connection box substantially correspond to the dimensions of the slots in the inner profile. This embodiment offers the same advantages as the first embodiment, besides the advantage of having the removability without having to slide the carrier upward, an advantage that is especially important in case of having to carry out necessary repair works.

For the removable character it is furthermore interesting to have every cylindrical or half-cylindrical carrier supported by a carrier ring that is mounted onto the inner profile and extends around the inner profile, whereby the profile of the carrier ring corresponds to that of the outer profile.

Preferably the PV cells are positioned at the interior of a glass tubular part. The PV cells may be amorphous silicon cells, film type PV cells or even crystalline silicon cells. Preferably the PV cells are crystalline silicon cells because of their high efficiency. The PV cells are suitably provided at the inner side of a transparent curved surface, preferably a tubular surface and more preferably a tubular glass surface. For manufacture of curved crystalline silicon cells reference is made to WO-A-2012112036 of the same applicant. In this patent publication it is explained how one can obtain a curved crystalline silicon cell and more especially a glass tubular elements provided with curved crystalline silicon cells at its interior side.

The construction is furthermore simplified by placing a sealing ring around the inner profile, above the outer profile, a sealing ring that is connected to both profiles and that is connected to the inner profile by means of screws that extend into the abutments or ridges of the outer profile.

The fact that the inner profile comprises a cover that is placed on top of the profile and that is connected to the inner profile by means of screws that extend into the bores of the inner profile simplifies the construction.

Although other types of constructions cannot be excluded, it is advantageous to have the outer profile connected to a substantially horizontally extending base plate by means of screws that extend through the base plate and into the bores of the outer profile.

An important application field of the invention can be found in street lighting. A preferred embodiment therefore provides a mast of the aforementioned type, in which the mast is part of a lamp post that furthermore at least comprises one fixture that comprises a light source. Other applications such as light sources for the illumination of buildings, flags, etc. cannot be excluded, in the same way as other consuming elements of electrical energy, such as clocks, digital displays, thermometers, or wireless communication devices. The devices concerned are preferably, but not necessarily, mounted onto the mast. It cannot be excluded either that the mast is a solitary mast.

The mast according to the invention may advantageously use energy directly generated by sun light and store this energy for use at a desired different moment in time for illumination purposes. The mast may also be used in combination with other energy consuming apparatuses such as for example sensors, for example meteorological sensors, camera's, telecommunications, for example GMS antennas. Preferably light source used for illumination purposes exhibit a high efficiency, such as LEDs. Of course also possible to use other types of light source. The mast may suitably be used without any additional cabling to a power grid. This results in considerable infrastructural saving. Another advantage is that in case of a power network problem the lights of the mast according to the invention will remain switched on. Situations may be foreseen where the mast is connected to a power grid. The power from the power grid will then only be used in situations wherein not enough energy is generated by the PV cells or where excess energy is fed into the energy network. The mast may be used for public lighting and more particularly in the form of lamp posts. Other applications such as traffic lights, flagpoles, clocks or advertisement objects may also be considered.

Hereafter, the invention shall be explained in further detail and reference shall be made to the accompanying drawings in which:
Figure 1 is an exploded perspective view of a lamp post according to the invention;
Figure 2 is a cross-sectional view of a combination of an inner profile and an outer profile;
Figure 3 is a cross-sectional view of a combination of an outer profile and a housing that has been placed in the outer profile;
Figure 4 is a perspective view of a housing for a battery of an electronic unit.

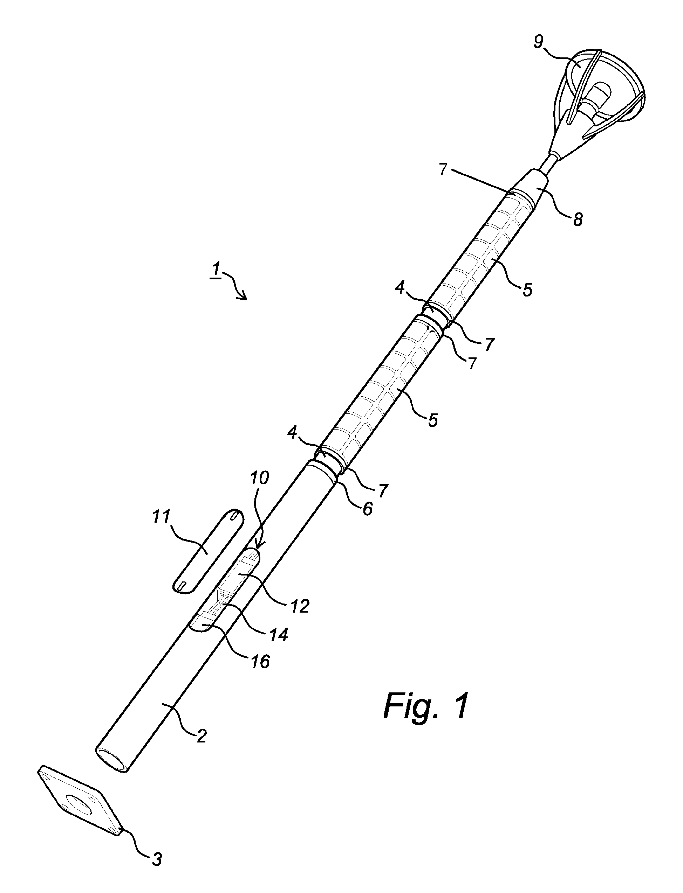

The lamp post shown in Figure 1 comprises a tubular mast 1 with an outer profile 2 that extends upwardly from a base plate 3. Above the outer profile an inner profile 4 extends upwardly. The inner profile 4 extends as well to and into the upper part of the outer profile 2. Around the upper part of the inner profile 4 are mounted two PV units 5 shaped as a cylindrical surface. Directly on top of the outer profile and around the inner profile 4 a covering ring 6 can be found that is rigidly connected with the outer profile, whereas under and above each of the PV units a carrier ring 7 is provided that is rigidly connected with the inner profile. The carrier ring 7 fixes and seals the PV unit 5. On top of the combination of the inner profile and the PV units 5 a cover 8 is provided that closes off the combination and that, if the mast is part of a lamp post, serves as a carrier for a fixture 9 in which a light source is placed. In the embodiment shown, the fixture 9 is centrally located above the cover 8, but it is also possible to place the fixture 9 decentralized or to fix it by means of a bracket or a jib on the cover 8. If fixture 9 is for example provided as a jib it may also be positioned between two PV units 5 or under the PV units 5. It is also possible to secure the bracket or jib to another structure. Also more than one fixture can be connected to the lamp post.

Below the part of the outer profile 2 in which the inner profile 4 extends, an opening 10 is made in the outer profile that can be closed off and locked by means of a hatch 11 in a way that is known to the man skilled in the art. Behind the opening 10 a housing 12 is provided in the outer profile 2, in which electronic circuitry is mounted that will be used to control the energy currents in the lamp post. This housing can be moved through the opening 10. Below this housing 12, a number of housings 16 for batteries have been placed. These housings, which in the horizontal plane at most may have suitably the same dimensions as the housing 12 as shown, are initially inserted through the opening 10 and can subsequently be moved downwardly inside the profile. The lower wall of the housing 12 comprises a number of sockets in which plugs fit that are connected with the ends of cables that lead to the batteries, and also possibly connected with a cable that forms a connection with the power grid. With the aim of making the connection with the PV units 5 as well as with the light source placed in the fixture 9, the upper wall of the housing also comprises sockets.

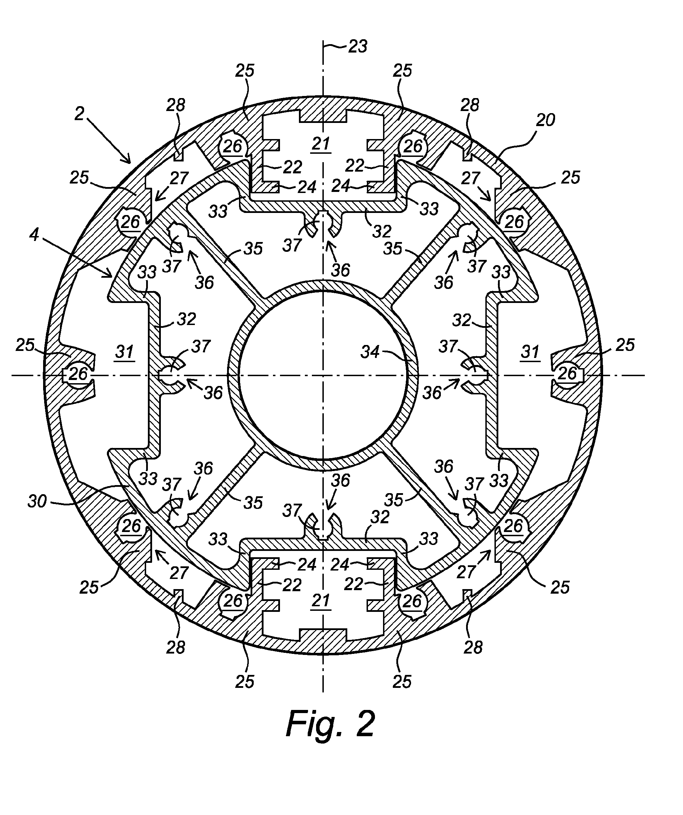

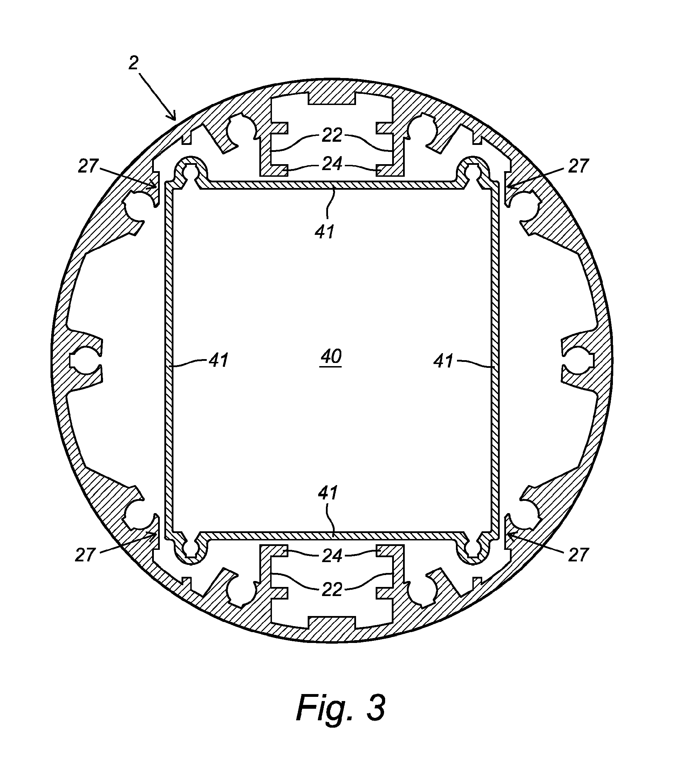

Figure 2 shows a cross-sectional view of the combination of the outer profile 2 and the inner profile 4, whereby the outer profile comprises a substantially cylindrically shaped outer wall 20 with a rounded or polygonal external surface. The outer profile comprises a first axis of symmetry 23. Symmetrically to this axis of symmetry 23 and to the second axis of symmetry that is perpendicular to the first axis, two channels 21 are formed by channel walls 22, two for each channel, that extend in a direction that is parallel to the first axis of symmetry. At their respective ends these channel walls 22 comprise strips 24 that extend in the direction of the first axis of symmetry 23. Furthermore, the outer profile comprises ten substantially trapezoidal ridges 25 of which four form a continuation of the channel walls 22, two in the centre of the second axis of symmetry, and the remaining four in between these groups, in such a way that a substantially uniform distribution over the circumference of the outer profile 2 is obtained. Each of the substantially trapezoidal ridges 25 comprises bores 26 that extend axially. The four ridges 25 in between the ridges that adjoin the channels and the ridges that are located on the second axis of symmetry comprise an abutment surface 27, the function of which shall be explained referring to Figure 3. Part of the outer wall 2 can be removed with the aim of making an opening 10 by milling the circumference of the opening, in such a way that the cover 11 is released. Furthermore, it is possible for the outer profile to comprise two symmetrical openings 10 and hatches, possibly at the same height without the latter being absolutely necessary.

The inner profile 4 also comprises a cylindrically shaped outer wall 30 comprising four slots 31 that each comprise a front wall 32 and two side walls 33. The slots 31 fit around the channel walls 22 with the strips 24 of the outer profile 2. This fitting ensures that the inner profile 4 is secured against a rotational movement relative to the outer profile 2. Furthermore, the parts of the outer wall 30 of the inner profile 4 in between the slots 31 have a common surface with the trapezoidal ridges of the outer profile 2. This way the mutual translational movement in the plane of the cross section can be avoided. Also the interface between the front wall 32 of the slots and the strips 24 serves to avoid this kind of translational movement. In the centre of the inner profile 4 a tube 34 is inserted that is connected by means of four arms 35 to the parts of the outer wall 30 that are situated in between the slots. Although the arms are symmetrical to both axes of symmetry, their enclosed angle is substantially 90°. Continuing from the outer wall 30 and from each of the arms 35, and in the middle of the front wall 32 is a ridge 36. Each of these ridges comprises a bore 37 that extends in an axial direction.

Figure 3 shows the combination of an outer profile 2 and a housing 40 that can be the housing of a battery or a housing of controlling electronic circuitry. The housing 40 comprises four walls 41, whereby two opposing walls 41 are enclosed by the channel walls 22 and the strips 24 that are connected to the latter. This ensures that no movement is possible in the direction that is perpendicular to these planes. The other pair of side surfaces 41 of the housing rests against the abutment surfaces 27 that are provided on four of the substantially trapezoidal ridges, in such a way that movement in the opposite direction is made impossible. The first pair of side surfaces 41 comprises a pair of protrusions 42 through which tension bolts pass. The tension bolts are used to connect the top and bottom walls of the housing to the side walls of the housing. Other configurations are not excluded and it is for example possible for the side walls of the housing to comprise cooling ribs, which can be useful in cases in which the components inside the housing are likely to produce a lot of heat. In that case, such cooling ribs preferably are provided in such a way that they can extend into the free space between the housing and the outer wall 20 of the outer profile. The housing, like the profiles, is preferably made of aluminium. Although this is not visible in the drawing, the walls of the first and second housings comprise cooling ribs.

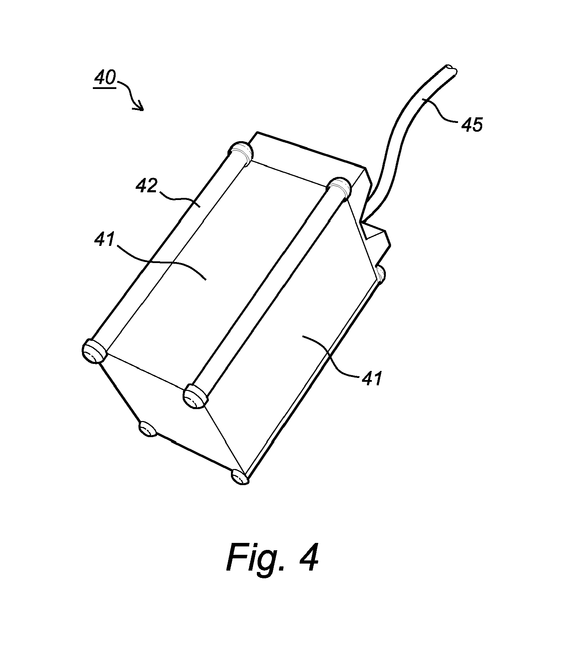

Finally, Figure 4 gives a representation of such a housing 40 in perspective, with side walls 41 and protrusions 42. This Figure also shows a cable 45 that is connected with the top wall of the housing. The presence of a single cable 45 makes it clear that a battery is provided in the housing.

It shall be clear that the above explained embodiments can be subject to variations and modifications without moving outside the scope of the attached claims.

## Claims

1. Mast equipped with PV cells, comprising:
a substantially vertically extending lower section; and
an upper section, equipped with PV cells and as a continuation placed on top of the lower section and connected to the latter; wherein
the lower section comprises an outer profile with an external surface;
the upper section comprises an inner profile,
the inner profile extends over part of the lower section in the outer profile;
both profiles comprise common contact surfaces in the common part of the lower section;
a first number of contact surfaces extends with a tangential component;
a second number of contact surfaces extends with a radial component.

2. Mast according to claim 1, wherein the cross section of each of the profiles is symmetrical to a first axis of symmetry, and that the first axes of symmetry of the two profiles in the common part of the lower section coincide.

3. Mast according to claim 2, wherein the outer profile comprises a circumferentially extending outer wall that forms a continuation of the external surface, as well as at least one pair of a channel-enclosing channel walls that extend from the outer wall and are symmetrical to the first axis of symmetry, whereby the side facing away from the channel extends with a component that is parallel to the first axis of symmetry.

4. Mast according to claim 3, wherein the outer profile comprises at least one pair of abutments that form a continuation of the outer wall and are symmetrical to the first axis of symmetry, wherein these abutments comprise tangential planes extending substantially parallel to the first axis of symmetry, whereby the tangential planes extend from the projection perpendicular to the axis of symmetry of the end of the channel walls on the tangential planes with a directional component towards the centre of the outer profile.

5. Mast according to claim 3, wherein the abutments comprise a through bore extending in the axial direction.

6. Mast according to claim 2, 3, or 4, wherein the outer profile comprises a number of substantially trapezoidal ridges that extend from the outer wall to the inner of the profile, whereby a number of these ridges comprise a through bore in the axial direction.

7. Mast according to any of claims 2-6, wherein the cross section of each of the profiles is symmetrical to a second axis of symmetry that is perpendicular to the first axis of symmetry, and that the second axes of symmetry of the two profiles coincide in the common part of the lower section.

8. Mast according to any of the preceding claims, wherein the inner profile comprises a circumferentially extending outer wall in which at least two slots are provided, and that each of these slots fits around a pair of channel walls of the outer profile.

9. Mast according to any of the preceding claims, wherein at least one of the profiles comprises an extruded aluminium profile.

10. Mast according to any of the preceding claims, wherein the upper section comprises an inner profile that is adjusted to extend through PV cells that have been organized on a structure with a cylindrical surface.

11. Mast according to claim 10, wherein the PV cells are provided in a cylindrical carrier, the internal dimensions of which substantially correspond to the external dimensions of the inner profile.

12. Mast according to claim 11, wherein every cylindrical carrier is supported at both ends by a carrier ring that is mounted on the inner profile and extends around the inner profile, whereby the profile of the carrier ring corresponds to that of the outer profile.

13. Mast according to any of claims 5-12, wherein a sealing ring is placed around the inner profile and above the outer profile, a sealing ring that is connected to both profiles and that is connected to the inner profile by means of screws that extend into the abutments or ridges of the outer profile.

14. Mast according to any of the preceding claims, wherein the mast is part of a lamp post that furthermore comprises a fixture with at least one light source.
